# EUROPEAN PATENT APPLICATION

(11) **EP 2 781 733 A2**
(43) Date of publication of application: **24.09.2014**
(21) Application number: 14000830.1
(22) Date of filing: 10.03.2014
(51) Int. Cl.: F03B 13/26

(54) **Submerged system for anchoring a marine device**

(30) Priority: 19.03.2013 SE 1300207
(71) Applicant: Aktiebolaget SKF, S 415 50 Göteborg (SE)
(72) Inventor: Lindén, Hans, S-442 94 Ytterby (SE)
(74) Representative: Gentzel, Marcus

(57) **Abstract**

A submerged system (300) for anchoring a marine device such as a sub-sea kite assembly within a fluid. The submerged system (300) comprises a lower tether member (310) having an anchoring point (315) configured for anchoring the submerged system (300) to a seabed, the lower tether member (310) comprising a first buoyant body (314) to enable a positive buoyancy such that the lower tether member (310) is capable of floating in a substantially upright orientation, the lower tether member (310) further comprising a frame structure (316) adapted to provide structural integrity to the submerged system (300) and capable of transmitting an axial force F to the seabed. Moreover, the submerged system (300) comprises an upper bearing module (320) operatively connected to the lower tether member (310), the upper bearing module (320) comprising a housing (326) enclosing a bearing unit (322) configured for supporting a rotational movement of a marine device and capable of transmitting the axial force F.

## Description

### FIELD OF THE INVENTION

The present invention pertains to a submerged system for anchoring a marine device such as a sub-sea kite assembly. In particular, the present invention pertains to a submerged system including a lower tether member and a bearing module for facilitating the swivelling operation of a sub-sea kite assembly.

### BACKGROUND OF THE INVENTION

Submerged tidal power applications can be very demanding in many aspects. For instance, it is often difficult and expensive to perform maintenance and repair work on such applications. Furthermore, installation of submerged tidal power applications is often costly and complicated requiring stiff structures to withstand heavy weather and other environmental impacts. This is particularly relevant for applications which are anchored on the seabed. In this environment, conditions such as low visibility and high pressure further contribute to a troublesome situation for repair and maintenance work.

One example of a submerged application that needs to be secured to the bottom of the sea is a tidal water power plant. EP 2 295 792 discloses one type of tidal water power plants. The tidal power water plan includes a kite and is secured to the bottom via a wire. The kite moves in the water and generates electrical energy via a turbine. However, the application also generates very high forces at the anchoring point of the wire at the bottom of the sea.

Other examples of applications that may need to be secured to the bottom are wave energy power plants, buoys and various vessels. One problem with many of the existing tidal power water plans and other submersible systems is that some of the submerged components in these systems are heavy and stiff, whilst being subjected to devastating forces from the tidal water. Hence, the components may need to be repaired or replaced rather frequently to ensure that overall system can function properly and still withstand the heavy conditions.

Accordingly, despite the activity in the field, there remains a need for an improved submerged system for use in a tidal power plant application which meets the requirements for robustness and reliability. More specifically, there remains a need for an improved submerged system for anchoring a sub-sea kite assembly. In particular, it is desirable that a balance is kept between the function of the submerged system and the requirement for maintenance of the components making up the submerged system.

### SUMMARY OF THE INVENTION

In view of the above-mentioned and other drawbacks of the prior art, a general object of the present invention is to provide a submerged system for anchoring a marine device such as a sub-sea kite assembly within a fluid.

According to a first aspect of the present invention, there is provided a submerged system for anchoring a marine device such as a sub-sea kite assembly within a fluid. The submerged system comprises a lower tether member having an anchoring point configured for anchoring the submerged system to a seabed. The lower tether member has a longitudinal extension in an axial direction A of the submerged system and comprises a first buoyant body to enable positive buoyancy such that the lower tether member is capable of floating in a substantially upright orientation. The lower tether member further comprises a frame structure adapted to provide structural integrity to the submerged system and capable of transmitting an axial force F to the seabed. Moreover, the submerged system comprises an upper bearing module operatively connected to the lower tether member. The upper bearing module comprises a housing enclosing a bearing unit. The bearing unit is configured for supporting a rotational movement of a marine device and capable of transmitting the axial force F. The upper bearing module is further provided with a connecting point for a marine device. In addition, the upper bearing module is adapted to be arranged above the lower tether member as seen in the axial direction A of the submerged system.

Preferred optional features are recited in the associated dependent claims.

By the arrangement of the present invention and in particular the provision that the upper bearing module is adapted to be arranged above the lower tether member as seen in the axial direction A of the submerged system, the submerged system facilitates installation and service of the bearing unit. This is due to the fact that the bearing unit is positioned as close to the sea surface as possible without impairing the swivel function and/or movement of the marine device (sub-sea kite assembly). Accordingly, the present invention provides a system having improved installation and maintenance facilities compared to a mooring system or submerged system with a bearing unit located on the seabed. To this end, the present invention provides a less expensive system in terms of installation and service costs compared to existing sub-sea kite assemblies. In addition, there is no need for a complicated bearing unit solution on the seabed.

Another advantage with the present invention is that the point of rotation, which is generally defined by the bearing unit and the connection point of the upper bearing module, is arranged closer to the marine device (or sub-sea kite assembly) compared to a system having the point of rotation on the seabed.

Since the submerged system includes a lower tether member and a bearing module according to the provisions above, the swivelling operation of a marine device such as a sub-sea kite assembly is facilitated.

By the provision that the lower tether member comprises a first buoyant body to enable positive buoyancy such that the lower tether member is capable of floating in an upright orientation, and a frame structure configured to provide structural integrity to the submerged system, the complete submerged system is capable of maintaining an upright orientation even during a slack water situation. In this manner, maintenance operation of the system is further facilitated. Moreover, since the frame structure provides structural integrity to the system, the lower tether member has improved stiffness and robustness compared to previous submerged systems. Hence, by the present invention it is not only possible to provide a submerged system with a stiff tether member, but also a system which is capable of floating in a substantially upright orientation.

From the above it is therefore realised that many of the problems in existing submerged systems can be alleviated. For instance, it has been found by the inventors that many of the existing systems are rather fragile and typically subjected to devastating forces from the tidal water current. Hence, they have a tendency to collapse and/or impart negatively effects to the system which is detrimental to the function of the system. In particular, the system requires low friction between its components so as to rotate in an effective manner such that sub-sea kite assembly can make use of the tidal water currents. However, by the present invention, it becomes possible to provide a sufficiently stiff and resistant tether member which is superior compared to a softer tether member. In addition, since the lower tether member is capable of floating, it becomes less complicated to carry out maintenance work. Moreover, due to the construction of the submerged system, the rotatable function of the system is further improved such that less friction is generated between the components.

In the context of the present invention, it is to be noted that the term "is capable of floating" refers to the principle that the lower tether member is capable of floating to the sea surface if not anchored to the seabed by the anchoring point. That is, the lower tether member would begin to drift upward due to its positive buoyancy if not sufficiently anchored. However, since the lower tether member is anchored to the seabed when the system is in a use mode, the lower tether member will be positioned in an upright orientation due to its buoyancy, i.e. it appears as the submerged system is floating in the middle of the fluid, or somewhere in between the bottom and the surface. This is a significant improvement in view of previous systems which often include solid and heavy columns or tether members.

The present invention is particularly useful when the fluid is sea water. However, the present invention can also be installed in a bigger lake, river or near a waterfall.

By the functional feature that the buoyant body has positive buoyancy means, the buoyant body is configured to generate a buoyancy force allowing the submerged system to float in a substantially upright position in the sea. Without being bound by any theory, it is realised that the buoyant body defines a profile configured to generate a hydro-dynamically lift when exposed to flow. An object becomes positively buoyant when it weighs less than the water it displaces. As an example, the buoyant body can be filled with sufficient air to give the overall submerged system an overall positive buoyancy. Other gaseous mediums are also conceivable as is further explained hereinafter. In other words, due to the buoyant body, the submerged system will strive to the sea surface allowing the bearing unit and other components of the system to come closer to the sea surface such that service of the bearing unit is facilitated. It is to be noted that when buoyancy is taking place, it appears as though the submerged system is floating in the middle of the fluid, or somewhere in between the bottom and the surface. When the submerged system is in a non-operating state, it is even possible that the submerged system can float to the sea surface due to its buoyancy such that maintenance work can be carried out from the sea surface. However, this is only possible if the design of the system and its anchoring to the seabed allows for such floating.

The anchoring point of the lower tether member is configured for anchoring the submersible system to a seabed. The anchoring point may be constructed to ensure that the lower tether member is maintained in a non-rotational configuration. Alternatively, the anchoring point is constructed such that the lower tether member is rotational connected to the anchoring point. The lower tether member may be anchored by a chain or a suitable inter-locking mechanism as is evident by the skilled person.

The term "structural integrity" refers to the ability of the submerged system and/or lower tether member to withstand heavy conditions from the tidal water and maintain its upright orientation during use within a fluid such as sea water. By the provision that the frame structure is adapted to provide structural integrity to the system, it becomes possible to provide a lower tether member which is sufficiently stiff and robust to withstand the heavy conditions originating from the tidal water.

The marine device can be connected to the submerged system by means of an elongated portion, such as a strut wire, tether, cable, rod or the alike. In this context, the term "elongated portion" therefore refers to a wire, tether, cable, rod or the alike, or any other suitable restraint which is capable of holding a sub-sea kite assembly in place, allowing a radius in which it can move around

The submerged system may be included in a tidal power plant system to produce energy. That is, the submerged system may be adapted for use in anchoring a sub-sea kite assembly. In another example embodiment, the submerged system may be adapted for use in anchoring a marine device within a submerged position, or at least partially submerged position. The submerged system assembly is typically stationary and anchored to a seabed. However, it is also possible within the scope of the present invention that the submerged system can be used in other sub-sea applications where sea-base anchorage is required with an angular movement of freedom. As mentioned above, sub-sea kite assembly or tidal water plant kite assembly is only one specific example for the usage of the submerged assembly. Accordingly, the marine device may comprise a sub-sea kite assembly.

In another example embodiment, the marine device may comprise a vessel, such as a floating vessel, submersible vessel or the like.

In various embodiments, there is provided a tidal power plant system including the submerged system, a sub-sea kite assembly, a turbine and a generator. In this aspect of the invention, the sub-sea kite assembly is connected to the submerged system via a pair of struts, cables or wires.

The application of a submerged system, according to any of the aspects as mentioned above, to a sub-sea kite assembly provides a low friction technical solution, as is explained below. In particular, the present invention provides a low friction technical solution during start-up and running phases of the submerged system. It is also possible within the scope of the present invention that the submerged system can be used in other sub-sea applications which require low-friction during start-up and running phases. Sub-sea kite assembly or tidal water plant kite assembly is therefore only one specific example for the usage of the submerged system.

Big demands are put on submerged systems and/or tidal power plant to withstand impacts such as vibrations, shocks, torques and other environmental physical impacts in order to effectively make use of the high forces generated by tidal water. Without being bound by any theory, it is understood that tidal water is typically lasting for about 6h every day and night. During this period of time, the tidal water generates a constant linear force F which is acting on the bearing unit and its components in the axial direction A". Due to this axial force, the bearing unit and the submerged system are subjected to heavy vibrations and shocks. In addition, since the sub-sea kite assembly is swivelling in a pattern around the submerged system during the tidal water interval, the wire may be entangled or twisted causing wiring errors and other type of shorts. It is also noted that the wire itself is a notoriously weak link in the marine environment. Not only is it constantly under attack by corrosion caused by the water and heavy weather, but it is also under stress from the constant chock and vibrations of the passing river currents. Accordingly, in order to better withstand the impacts of this environment, there is provided a bearing unit and submerged system which better can absorb the shocks and take care of devastating vibrations. In the context of a marine device including a sub-sea kite assembly, the bearing unit is externally pressurized by a force from the kite. The force from the sub-sea kite assembly refers to the axial force F, pulling force F or the tensile force F.

In addition, the present invention has an advantage over prior art system, which are more sensitive to corrosion. Corrosion resistance is particularly important in a tidal water environment. The present invention also requires little or no maintenance since the system can be arranged near the sea surface during non-operation of the system.

Moreover, by the present invention, it becomes possible to provide an assembly that is robust, reliable and flexible in the sense that the submerged system is capable of performing a rotational movement in three directions. This is particularly important since tidal power plants and tidal turbines utilize tidal currents that are moving with velocities of between 4 to 6 knots causing a lot of stress on the system. In this manner, a submerged system is provided which requires less maintenance.

In the context of the present invention, the bearing unit of the upper bearing module is capable of handling high forces generated from axial pulling forces, e.g. forces generated by the swivelling operation of a sub-sea kite assembly which is driven by the flow of tidal currents. The bearing unit is therefore capable of supporting rotational movement in a simple manner with a minimal level of friction between its components. Accordingly, the bearing unit is rotatable arranged around an axis A", and configured to take up axial forces in the axial direction A". In this manner, the bearing unit may be subjected to a torque allowing it to rotate, and to an axial force F allowing it to move in the axial direction A" (typically corresponding to the axial direction of the system and the lower tether member).

It is to be noted that the submerged system has an axial direction A, the lower tether member has an axial direction A' and the bearing module (and bearing unit) has an axial direction A". However, the axial directions typically correspond to each other when the various components of the system are assembled, i.e. the axial direction A of the system corresponds to the axial direction A' of the lower tether member. Analogously, the axial direction A of the system typically corresponds to the axial direction A" of the bearing module (and bearing unit). For simplicity, the various centre axis of the system, the tether member and the bearing module (bearing unit) have been denoted with corresponding symbols, that is A, A' and A".

The first buoyant body may be made of an extruded polymer. Likewise, the housing of the upper bearing module may also be made of an extruded polymer. In order not to impair the positive buoyancy of the submerged system, it is advantageous that the first buoyant body and the housing of the bearing module are made of lightweight materials. One suitable material for the frame structure is stainless steel.

In one example embodiment, the first buoyant body may be rotatably connected to the frame structure. In this manner, the buoyant body is capable of rotating about the frame structure and/or the centre axis of the lower tether member when forces from the tidal water currents are acting on the lower tether member. As such, the risk of having a distorted or twisted lower tether member is minimized. This is an additional advantage over existing non-rotatable tether members.

In one example embodiment, the first buoyant body may comprise a plurality of chambers to contain a gaseous medium such that the lower tether member is provided with positive buoyancy. In other words, the plurality of chambers is an integral part of the first buoyant body. Advantageously, the gaseous medium is air. However, other gaseous mediums are conceivable as long as the density of the medium is less than the density of the surrounding sea water allowing the lower tether member to float in an upright position in the sea. In addition, whilst the present invention described herein largely makes use of air in the buoyant body to obtain positive buoyancy, it is to be noted that further configurations are possible within the scope of the present invention. Hence, the buoyant body may comprise solid buoyancy, gas or a buoyant fluid. When the buoyant body includes a liquid, it preferably comprises a low density liquid, such as methanol, oils, suspensions of low density solids in a liquid, or slurries of low density solids in a liquid or any mixtures thereof. Alternatively the buoyant body may comprise a solid buoyancy in the form of solid pure materials and solid composites, such as syntactic foams as long as the lower tether member is allowed to float in an upright position. Therefore the ultimate selection of an appropriate body buoyant construction is dependent on the desired location of the system taking available installation and manufacturing aspects into consideration.

Typically, the plurality of chambers have a longitudinal extensions in an axial direction A' of the lower tether member. The chambers can be obtained in many ways. As an example, the plurality of the chambers can be spaced apart by wall segments.

In order to ensure that no water flows into the chambers, the chambers are sealed by an upper end portion and a lower end portion. In this manner, it is also ensured that the chambers can maintain the gaseous medium for many years without requiring refill. As such, the first buoyant body is sealed by an upper end portion and a lower end portion.

In one example embodiment, the frame structure may comprise a plurality of frame segments arranged in a circular formation about a centre axis A' of the frame structure. In this manner, the frame structure is provided with sufficiently stiff and rigid construction preventing the lower tether member to become twisted or distorted when tidal water current forces are acting on the system/member. It is to be noted that the centre axis A' typically has a direction corresponding to the direction of the axis A of the submerged system. However, the frame structure can be obtained in several ways as long as the frame structure is capable of providing a sufficient level of structural integrity to the submerged system.

In addition, the frame structure may further comprise a tube member extending along the centre axis (A') of the frame structure and adapted to transmit the axial force F. Typically the frame structure is adapted to transmit axial forces between the upper bearing module and the seabed, which are generated by the marine device (sub-sea kite assembly). In this context of the present invention, the plurality of the frame segments may be arranged such that they enclose the tube member arranged along the centre axis A'. By this arrangement, the structural integrity of the lower tether member is further improved. The frame structure can be made by any suitable material that is capable of imparting a sufficient level of structural integrity to the lower tether member. As an example, the frame structure can be made of high-tensile steel. The steel may also be a stainless steel. Hence, alternatively, the frame structure can be made of high-tensile stainless steel. Each frame segment may have a delta-shaped cross sectional profile with a slightly curved outer edge so as to form a frame structure with a circular cross section profile. As an example, the frame structure may include 10-15 frame segments of same or different sizes. In one example embodiment, the frame structure includes 12 frame segments. It is to be noted that frame segments may have any suitable form as is evident to the skilled person as long as the lower tether member is provided with an appropriate level of structural integrity to keep the lower tether member and/or the submerged system in a substantially upright orientation. The frame structure may have a diameter between 150-300 mm and a length of 4-7m. In one example embodiment, the frame structure may have a length of 6m. Accordingly, the lower tether member may also have a length of 4-7m. In one example embodiment, the lower tether member may have a length of 6m.

Accordingly, from the above passage it is realised that by the frame structure and the first buoyant body of the lower tether member, the submerged system can be remained in an essentially upward position in the sea water. The upward position typically corresponds to an essentially vertical position in the sea water. This is partly due to the buoyant effect of the buoyant body and partly due to the structural integrity of the frame structure.

According to one example embodiment, the submerged system is used in a tidal power plant. For instance, the submerged system can be used in a tidal water power plan including a sub-sea kite assembly.

The bearing module may be configured to interact and counteract with a wire of a sub-sea kite assembly to reduce the forces acting on the submerged system as well as to provide support for the sub-sea kite assembly such that it can freely swivel around the submerged system.

The bearing unit may include any type of bearing as is known to the skilled person as long as the bearing unit can be configured for supporting a rotational movement of the sub-sea kite assembly and capable of transmitting the axial force. In this manner, the subs-sea kite assembly can freely swivel around the centre axis A of the system. The bearing unit should be simple, robust, reliable and capable of handling high forces generated from an external load, e.g. a sub-sea kite assembly which is driven by the flow of tidal currents. Typically, the bearing unit should be designed to withstand an axial load corresponding to 2000kg. However, the ultimate selection of a suitable bearing type is dependent on the arrangement of the sub-sea kite assembly and its weight as well as on heavy conditions of the tidal water environment.

In one example embodiment, the bearing unit is provided in the form of a conventional rolling element bearing. The bearing unit may further comprise any suitable rolling element bearing as is known in the art. Hence, according to various exemplifying embodiments, the rolling element bearing is formed of a radial rolling element bearing, a spherical roller thrust bearing, a tapered roller bearing, a cylindrical roller thrust bearing, a thrust ball bearing, an angular contact ball bearing, or a combination of the two or more of these bearing types. For example, the bearing unit may comprise a first and a second rolling element bearing arrangement, wherein the first and the second rolling element bearings may be formed of different bearing types with different rolling element and raceways designs, such as according to the characteristics of any one of exemplified bearing types described above.

According to an example embodiment, the bearing unit may comprise a plurality of axial bearings operatively connected to each other by an elastic connection.

According to an example embodiment, the housing of the upper bearing module may include a second buoyant body to enable additional buoyancy. The second buoyant body may comprise a plurality of second chambers arranged within the housing to contain a gaseous medium. In this manner, the gaseous medium imparts positive buoyancy to the upper bearing module. Analogously to the arrangement with respect to the first buoyant body, the gaseous medium is typically air. Advantageously, the plurality of second chambers has an extension in an axial direction A" of the upper bearing module. Typically, the plurality of the second chambers is spaced apart by second wall segments. In addition, the plurality of the second chambers may be sealed by a second upper end portion and a second lower end portion. If not otherwise specified, the second buoyant body possesses the same advantages and properties as the first buoyant body of the lower tether member as mentioned above.

According to one example embodiment, the second buoyant body may be rotatably connected to the bearing unit for the same reasons as the first buoyant body may be rotatably connected to the frame structure. In this manner, the profile of the second buoyant body is capable of following the tidal flows in an efficient manner and adjusting its direction depending on the direction of the tidal flows.

As mentioned above, the submerged unit is provided with a connecting point, connecting the subs-sea kite assembly to the system. In various embodiments, the subs-sea kite assembly is rotatably connected to the connecting point. The connecting point may an integral part of the upper bearing module or an additional component operatively connected to the upper bearing module. According to an example embodiment, the connecting point is an integral part of bearing unit.

In one example embodiment, the submerged system may be operatively connected to the subs-sea kite assembly by means of a swivel joint. In this context, a "swivel joint" refers to a connection which allows the connected object to rotate horizontally and vertically. In other words, a swivel joint is the combination of an almost 360° vertical joint and a 360° swivel. By means of the swivel joint, it is assured that the subs-sea kite assembly can move smoothly in all directions depending of the current velocity direction and the subs-sea kite assembly motions. Hence, the connecting point may be provided in the form of a swivel joint. The swivel joint may be configured to provide an attachment point for a marine device.

In addition, or alternatively, the submerged system may be operatively connected to the marine device by means of pair of support bearings. In this manner, an even smoother rotation of the subs-sea kite assembly is achieved. Moreover, support bearings are typically designed to avoid radial movement of the bearing.

Support bearings are commonly known in the art and suitable support bearings can be selected by the skilled person depending on the specific situation. Accordingly, the nature, design and incorporation of support bearings into the submerged system of the present invention will be apparent to the skilled person in the art.

According to an example embodiment, the bearing unit may be provided in the form of a hydraulic unit. The hydraulic unit should be simple, robust, reliable and capable of handling high forces generated from an external load, e.g. a kite which is driven by the flow of tidal currents. The hydraulic unit may comprise a housing which has an inner diameter and an inner cylindrical surface, and forms an inner housing volume. The inner housing volume typically contains a lubricant fluid. The hydraulic unit may further comprise a piston member co-axially arranged within the housing. The piston member is configured to be rotatable around an axis A" and movable in the axial direction A". The piston member comprises a piston rod and a piston flange. The piston flange has an outer diameter and an outer cylindrical surface. The outer diameter of the piston flange is smaller than the inner housing diameter such that a radial gap is formed between the inner cylindrical housing surface and the outer cylindrical surface of the piston flange, whereby the lubricant fluid is capable of flowing through the radial gap upon an exertion of a tensile force F on the piston member in the axial direction A". In this manner, a hydraulic unit is provided which is smoothly operated and possible to be used in high load, high speed and/or high precision applications. Hence, the unit is particularly suitable for submerged applications. The hydraulic unit is both quieter and cheaper than available prior art solution, e.g. conventional thrust ball bearings. The hydraulic unit further has excellent corrosion resistance and requires little or no maintenance. Additional benefits over conventional thrust roller bearings are elimination of the failure of thrust bearings subjected to shock loads, no load condition, consequent failure of bearing raceways. By the provision that the outer diameter of the piston flange is smaller than the inner diameter of the housing such that a radial gap is formed between the inner cylindrical surface of the housing and the outer cylindrical surface of the piston flange, it becomes possible to decrease friction between the piston member surface and the inner surface of the housing. This is accomplished due to the radial gap which results in that there is no contact between the piston flange surface and the inner cylindrical surface of the housing.

Hence, the piston member is driven by a force originating from the tidal water forces. As mentioned above, the piston member is rotatable arranged around the axis A, and configured to take up axial forces in the axial direction A". In this manner, the piston member may be subjected to a torque allowing it to rotate, and to the axial force F allowing it to move in the axial direction A". The piston member includes a piston rod and a piston flange. Therefore, the piston member is configured such that the piston rod is capable of moving the piston flange from a lower (first) position to an upper (second) position as seen in the axial direction A". The piston rod and the piston flange may be integral parts of the piston member, e.g. made from the same material and material piece. Alternatively, the piston rod and the piston flange are made from separate pieces of material in order to provide a piston member which is less expensive. The piston rod and the piston member can also be made of different materials to further reduce the costs. One suitable material for the piston member is stainless steel. However, it is also possible within the scope of the present invention that the piston member may include further components, e.g. an additional extension rod or spring. It is also apparent to the skilled person that the attachment of the piston member/piston rod to another external rod must not be at the upper part of the housing. The piston member/piston rod can for instance be inserted to the housing from either of the side walls of the housing or even to the bottom of the housing. The specific arrangement of the piston member and the housing depends on the available space and the environment of the complete system.

The inner cylindrical housing volume, as mentioned above, forms a so-called chamber which surrounds a major part of the piston member. The inner housing volume is filled with the lubricant fluid of a suitable viscosity. The lubricant fluid is capable of flowing from one side of the piston flange to another side of the piston flange via the radial gap. In other words, the radial gap forms a flow channel. As such, a damping effect is provided by means of the flow of lubricant fluid across the piston flange. To this end, the piston flange is made with a deliberate clearance between the inner cylindrical surface of the housing and the outer cylindrical surface of the piston flange, which forms an annular gap in the radial direction R, i.e. the radial gap. The lubricant fluid flows through the radial gap at high speed when the tensile force F is exerted on the hydraulic unit in the axial direction A". As such, when the surface of the piston flange is pressed towards an inner surface of the housing, the lubricant fluid flow is constricted by the radial gap. The high pressure drop across the radial gap produces a pressure differential across the piston flange, which creates the damping force. Thereby, another function of the hydraulic unit is to dissipate energy by pushing lubricant fluid through the radial gap in order to produce a damping pressure within the housing of the hydraulic unit. The piston member can therefore better control and absorb shock loads or sharp load fluctuations from a sub-sea kite assembly or other similar applications.

By using a lubrication fluid, a hydro-dynamically lubrication is obtained in which the lubrication fluid is the atmosphere. The coefficient of friction is lower than with boundary-layer lubrication. In addition, hydro-dynamically lubrication prevents metal-to-metal contact between the housing and the piston member. Other possible lubricant fluids within the scope of the invention are, e.g. grease, air, other gases and/or magnetic fluids. Advantageously, the piston flange further comprises a plurality of check valves. The check valves allow the lubricant fluid to flow through the piston flange in only one direction in the axial direction A". As such, the check valves are closed in the first state, i.e. at a state when the axial force F is exerted on the piston member such that the piston member moves from a first position to a second position. As soon as the tidal water is over, the force acting on the piston member decreases. Eventually, the tensile force F is sufficiently low so as to open the check valves, allowing the piston member to return to its original position, i.e. the first position. Check valves are commonly known in the art and suitable check valves can be selected by the skilled person depending on the specific situation. Accordingly, the nature, design and incorporation of check valves into the hydraulic unit will be apparent to the skilled person in the art. In order to speed up the adjustment of the piston member when the tidal water is over, the hydraulic unit may further comprise a return spring. The return spring is co-axially arranged along the piston rod. In this context, the term "adjustment" means that the piston member returns from the second position to the first position, i.e. the starting position. Preferably, the return spring is tensioned such that the adjustment period of the piston member is less than 20 minutes.

Advantageously, the bearing unit may comprise a sealing arrangement such that the bearing module forms a closed system. In various embodiments, the sealing arrangement is located at an end of the bearing unit to seal the annular gaps between bearing unit and the housing. In this manner, it is safe-guarded that sea water can leak into the unit/module, and no working lubrication fluid can leak out from the system, i.e. the housing.

Advantageously, the bearing unit may comprise a pair of support bearings. Support bearings are typically designed to ensure that no radial movement of the bearing unit can take place. Moreover, the support bearings ensure that there is no physical contact between the housing and bearing unit. Support bearings are commonly known in the art and suitable support bearings can be selected by the skilled person depending on the specific situation. Accordingly, the nature, design and incorporation of support bearings into the hydraulic unit of the present invention will be apparent to the skilled person in the art.

The cross-sectional profile of the lower tether member may resemble the shape of a circle, rectangle or any other shape as is evident to the skilled person. Likewise, the cross-sectional profile of the bearing module may resemble the shape of a circle, rectangle or any other shape as is evident to the skilled person.

According to an example embodiment, the lower tether member may be provided with an outer hydro-dynamically shaped surface. In addition, or alternatively, the upper bearing module may be provided with an outer hydro-dynamically shaped surface. In this manner, the lower tether member and/or bearing module is provided with hydro-dynamical profile. An advantage with this aspect of the present invention is that the lower tether member is allowed to better meet the forces from the tidal current without being twisted or positioned in an unfavourable sideway-orientation as seen in the direction of the tidal water current. Analogously, if the bearing module is provided with a hydro-dynamical profile (or surface), the bearing module is allowed to better meet the forces from the tidal current without being twisted or positioned in an unfavourable sideway-orientation as seen in the direction of the tidal water current. In addition, a hydro-dynamically shaped surface has a positive impact on the friction between the outer surface of the lower tether member (or bearing module) and the surrounding tidal water currents. A hydro-dynamically shaped surface can be obtained in manner ways. As an example, the hydro-dynamically shaped surface or profile can be constructed by a tapering leading edge and a trailing edge in the form of a rudder.

In this context, the outer hydro-dynamically shaped surface may have a tapering leading region with a convex surface and a trailing region with a convex surface. In other words, the leading region is tapering towards the direction of the tidal current, i.e. it is adapted to face towards a tidal current. Advantageously, the trailing edge is shaped so as to function as a rudder.

The upper bearing module may be operatively connected to the lower tether member by an inter-locking means. In this manner, it becomes possible to provide an upper bearing module which is simple to connect to the upper bearing module and/or the anchoring point. Inter-locking means are commonly known in the art and suitable inter-locking means can be selected by the skilled person depending on the specific situation. Accordingly, the nature, design and incorporation of inter-locking means into the submerged system of the present invention will be apparent to the skilled person in the art. Accordingly, the submerged system may include one or several inter-locking means.

The submerged system may include a support structure. In this manner, the support structure is the anchoring point for the lower tether member at the seabed. In other words, the support structure is configured for anchoring the submerged system via the anchoring point.

In one example embodiment, the submerged system may comprise a protective shell which at least partly surrounds the submerged system and/or its components from the surrounding environment. In this manner, the robustness and reliability of the submerged system is further improved. The protective shell can be made by e.g. rubber or any other flexible material. In various embodiments, the submerged system is encapsulated and sealed by the protective shell such that no critical components are exposed to sea water.

The submerged system further may further comprise an elastic object, e.g. a spring, ensuring that a sub-sea kite assembly is kept in a safe position when no tidal water is present. In this manner, it is also possible to avoid that the kite will unintentionally rotate in the water in an uncontrolled manner. In various embodiments, the elastic object is provided in form of an integrated spring. Any suitable spring can be used, e.g. a leaf spring, helical spring etc. Another advantage of including an elastic object into the submerged system is that the kite can be remained in an essentially upward position or vertical position in the water.

Advantageously, the submerged system may comprise an electrical cable configured to transfer electrical energy and/or electrical signals. In this as aspect of the invention, the cables may transfer electrical energy from the sub-sea kite assembly via the submerged system to a unit arranged either in the system or on the seabed. Alternatively, the cables may transfer electrical energy from the kite assembly to the upper bearing module. In addition, or alternatively, the cables may transfer electrical signals within the bearing module and/or from the bearing module to the sub-sea kite assembly. In addition, or alternatively, the cables may transfer signals from a sensor arranged on the system to a control unit in the system. Hence, there are several types of cable arrangements within the system, and additional arrangements are conceivable by the skilled person. In order to further increase the robustness and reliability of the submerged system, the cable(s) may be integrated into the system.

According to an example embodiment, the submersible system may comprise a motor configured for facilitating a swivelling motion of a marine device. The motor may be operatively connected to a sensor being configured to monitor a torque of the sub-sea kite assembly and/or the bearing unit (e.g. a bearing shaft). Upon an indication from the sensor to the motor, the motor will be activated so as to provide additional energy to the submerged system such that the swivelling motion of the marine device (sub-sea kite assembly) is facilitated. The motor may for instance be activated when the sensor indicates that there is a need for complementary energy to the sub-sea kite assembly as a consequence of a lack of energy from the tidal water currents. The motor may be operatively connected to a shaft of the bearing unit and/or upper bearing module such that additional energy can be transferred to the marine device via the connecting point.

According to an example embodiment, the submerged system may comprise a second tether member having an inter-locking connection such that the second tether member can be operatively connected to the lower tether member or the upper bearing module. The second tether member may include any feature(s) of the features mentioned above with respect to the lower tether member. As an example, the second tether member is connected to the lower tether member by an inter-locking means so as to deliver submerged system with an extended tether member assembly. Hence, according to another aspect of the present invention, there is provided a submerged system including a plurality of tether members according to any of the aspects and/or example embodiments mentioned above. In this manner, it becomes possible to deliver a submerged system fulfilling any length dimension as required by a specific case.

In various example embodiments, the submerged system may include slip-rings for transferring of electrical power and signals.

Advantageously, the submerged system may include a sensor. There are several different possibilities for sensing a property or movement of the submerged system. Hence, the submerged system may include an angular sensor for sensing a relative rotation between the submerged system and the sub-sea kite assembly around at least one axial direction, e.g. the axial direction A. In this manner, it becomes possible to determine an angular position of the sub-sea kite assembly.

In various example embodiments, the sensor may be integrated in the bearing module. The bearing module may be located such that sensor can measure angular displacement around an axis.

In addition, or alternatively, the submerged system may include a plurality of bearings with integrated sensors for measuring angular displacements around several orthogonal axial directions. In addition, or alternatively, the sensor may be located within the housing. The robustness and reliability of the submerged system, and also the sensing function, is maintained by integrating the sensor into the housing.

In various embodiments, a moisture sensing means may be integrated into the submerged system. By measuring moisture in the submerged system, it becomes possible to get an indication of the condition of the submerged system. If the moisture level would exceed a certain value it could be an indication of that the submerged system needs to be reconditioned or replaced. The signal from a sensor and/or sensing means may be sent to a control unit, e.g. a computer, so as to calculate a value indicative of the condition of the submerged unit assembly.

In addition or alternatively, the submerged system may include a load sensing means for measuring a load originating from the sub-sea kite assembly. As an example, the load sensing means may be integrated into the submerged system. The load sensing means can be configured for monitoring the loads emanating from the sub-sea kite assembly. In this context, it is appreciated that loads which are too high or even too low may be an indication of a malfunction.

In various embodiments, a temperature sensing means may be integrated into the submerged system. For instance, the temperature may be monitored so as to provide an indication of the condition of the submerged system. The temperature value may be sent to a control unit, e.g. a computer, so as to calculate a value indicative of the condition of the submerged unit assembly.

Yet, in various embodiments, the submerged system may include a pressure sensor to measure a hydraulic fluid pressure of a hydraulic unit in the bearing module.

It is also envisaged to use combinations of the above sensors and sensing means. It is to be noted that the sensors should be arranged within the submerged system to ensure that the sensors are not impaired by the external environment, i.e. sea water.

The components of the submerged system should be sufficiently dimensioned to withstand big axial forces and several years in heavy condition without maintenance. It is to be noted that the shape and the size of the components are ultimately determined by the environment of the installation location of the submerged system, and it is therefore apparent to the skilled person in the art to make any final adjustments of the system dependent on each specific case.

In various embodiments, the components of the housing and buoyant bodies are made of friction reducing material, for example plastics material having a low friction co-efficient.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

The various aspects of the invention, including its particular features and advantages, will be readily understood from the following detailed description and the accompanying drawings, in which:
Fig. 1 schematically illustrates an example embodiment of a submerged system to the present invention, in which a marine device in the form of a sub-sea kite assembly is anchored to the submerged system;
Fig. 2a schematically illustrates an example embodiment of a lower tether member according to the present invention;
Fig. 2b is an exploded view of a part of the example embodiment in fig. 2a according to the present invention;
Fig. 3a schematically illustrates an example embodiment of an upper bearing module according to the present invention;
Fig. 3b is an exploded view of a part of the example embodiment in fig. 3a according to the present invention;
Fig. 4a schematically illustrates a cross-sectional view of an example embodiment of a bearing unit according to the present invention.
Fig. 4b schematically illustrates a cross-sectional view of another example embodiment of a bearing unit according to the present invention.
Fig. 4c schematically illustrates a cross-sectional view of yet another example embodiment of a bearing unit according to the present invention.
Fig. 4d schematically illustrates a cross-sectional view of the bearing unit as shown in fig. 4c, wherein the bearing unit is provided with a motor.

### DETAILED DESCRIPTION OF EXEMPLARY EMBODIMENTS OF THE INVENTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

Note that, "upper" and "lower" directions in the following description are used for facilitating the understanding of a positional relation between components in the figures. Therefore, the installation direction, use mode, and the like of the submerged system are not specified thereby. The same is applied to other embodiments described below.

In addition, it is to be noted although the description to follow makes reference to an axial direction A, an axial direction A' and an axial direction A", they typically correspond to the same axial direction even though they may slightly differ from each other when the submerged system is in use mode. Hence, when a force F or axial force F is acting in the axial direction of a certain component of the submerged system, it should be noted that this force is acting on the system or its components in the general axial direction of the system as mentioned above even though it is sometimes only mentioned that the force is acting in one specific axial direction.

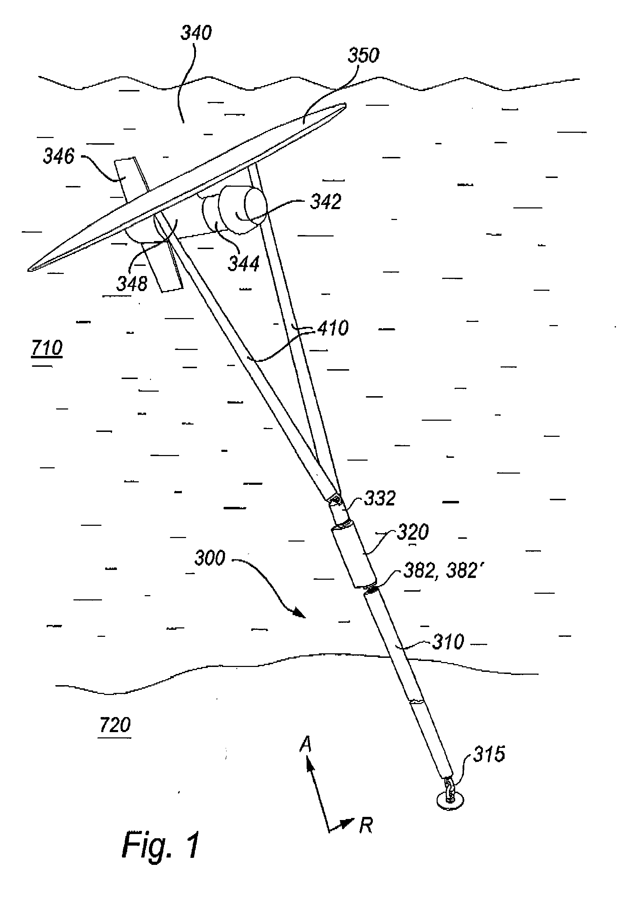

Referring now to the drawings and to fig. 1 in particular, there is depicted an example embodiment of a submerged system 300 according to the present invention, in which a marine device in the form of a sub-sea kite assembly is anchored to the submerged system. The submerged system 300 is suitable for anchoring a sub-sea kite assembly 340. In particular, as is shown in fig. 1, the submerged system 300 is anchoring a tidal water power plant kite assembly 340, sometimes only referred to as a kite or kite assembly. The submerged system 300 here is anchoring a sub-sea kite assembly 340 within sea water 710.

The sub-sea kite assembly 340 is a stream driven mechanism and is typically tethered to the submerged system 300 by means of at least one strut 410, wire, cable or the alike. In the example embodiment as shown in fig. 1, the sub-sea kite assembly 340 is connected to the submerged system 300 by a pair of struts 410. Hence, the sub-sea kite assembly 340 is connected to the submerged system 300 via a connecting point 332. In one example embodiment, the connecting point may be a swivel joint (not shown). The sub-sea kite assembly 340 here is provided in the form of an underwater kite which flies through the sea current. The sub-sea kite assembly 340 is configured to freely swivelling around the submerged system 300 within the range of the struts 410. Typically, the sub-sea kite assembly 340 is swivelling in circles following a never-ending trajectory. Alternatively, the sub-sea kite assembly 340 may swoop round in a figure-of-eight shape to increase the speed of water flowing through the turbine 342. In this manner, the sub-sea kite assembly 340 exploits lower speed tidal currents and converts energy from tidal stream flows into electricity. When the sub-sea kite assembly 340 is swivelling in a trajectory around the submerged unit assembly 300, there is a risk that the cable or wire becomes twisted.

As illustrated in fig. 1, the sub-sea kite assembly 340 here is further provided with a wind turbine 342 and a generator 344 (not shown). The generator is typically enclosed by a nacelle 348. The generator 344 is operatively connected to the turbine 342 to make use of the energy generated by the sub-sea kite assembly 340. Thus, as water flows over a kite wing 350, a lift force is generated which allows the sub-sea kite assembly 340 to move smoothly through the water and for the turbine 342 to rotate. Preferably, the sub-sea kite assembly 340 has neutral buoyancy to ensure that the sub-sea kite assembly is floating as the tide turns. Typically, struts accommodate power cables to shore but also cables for communication. By means of a rudder 346 and servo system in the rear part of the nacelle and a control system the kite assembly is steered in a predetermined trajectory. The struts attach the kite assembly to submerged system 300.

Hence, the submerged system 300 provides a mooring for a sub-sea kite assembly 340. The submerged system 300 is typically stationary and located under the water surface of a sea. In the illustrated example in fig. 1, the submerged unit 300 is secured to the ground via an anchoring point 315. The anchoring point may be operatively connected to a support structure located on the seabed (not shown). The support structure may include a foundation (not shown). The foundation may for instance be made of concrete. The support structure can be made of any suitable material, such as stainless steel. The support structure may also be made of several components, such as one part being made of stainless steel and another part, the foundation, being made of concrete. It should be noted that fig. 1 is a simplified illustration of the submerged system 300, and that various structures for securely anchoring/locating the system 300 on the seabed 720 are not explicitly indicated. Such structures can, however, be provided in many different ways apparent to one skilled in the art.

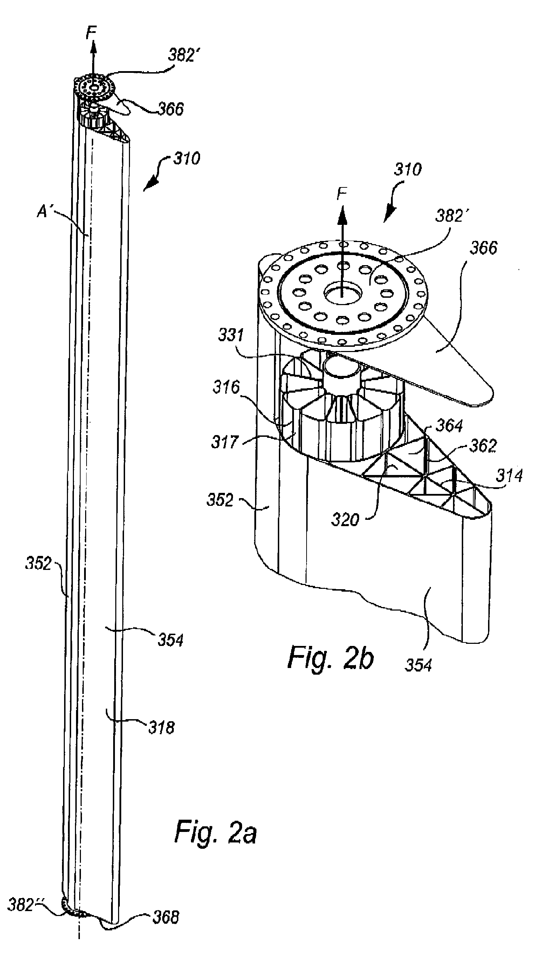

With reference to fig. 1, the submerged system 300 comprises a lower tether member 310 having an anchoring point 315 configured for anchoring the submerged system 300 to the seabed 720. A detailed view of the lower tether member 310 is shown in fig. 2a and 2b. The lower tether member 310 has an extension in the axial direction A' and comprises a first buoyant body 314. The first buoyant body 314 is adapted to enable positive buoyancy such that the lower tether member 310 is capable of floating in a substantially upright orientation. In addition, the lower tether member 310 comprises a frame structure 316 configured to provide structural integrity to the submerged system 300 and capable of transmitting an axial force F to the seabed. The first buoyant body 314 may be rotatably connected to the frame structure 316.

As is illustrated partly in fig. 1 and more specifically in fig 2a and 2b, the first buoyant body 314 here comprises a plurality of chambers 362 arranged within or inside the lower tether member 310. The chambers 362 have a longitudinal extensions in an axial direction A' of the lower tether member 310. Since the chambers contain a gaseous medium, the lower tether member is provided with positive buoyancy. In the illustrated example, the gaseous medium is air. However, other gaseous mediums are conceivable as long as the density of the medium is less than the density of the surrounding sea water allowing the lower tether medium to float in an upright position in the sea. This is particularly useful when there are no tidal water currents and there is a need for service of the various components of the system 300.

In the example embodiment, the plurality of chambers 362 extends in the axial direction A' of the lower tether member 310. The chambers 362 can be obtained in many ways. As an example, the plurality of the chambers 362 can be spaced apart by wall segments 364. The wall segments 364 may form a chamber 362 by themselves or in combination with the inner surface of the lower tether member, as shown in fig. 2b. In addition, a chamber may also be formed by a frame structure 316 and a wall segment 364. In order to ensure that no water flows into the chambers, the plurality of the chambers 362 are sealed by an upper end portion 366 and a lower end portion 368. In this manner, it is also ensured that the chambers can maintain the gaseous medium for many years without requiring refill.

Moreover, the lower tether member 310 includes a frame structure 316 as shown in fig. 2a and 2b. The frame structure 316 here comprises a plurality of frame segments 317 arranged in a circular formation about the centre axis A' of the fram structure 316. In addition, the frame structure 316 here comprises a tube member 331 extending along the centre axis A'. The tube member 331 is adapted to transmit axial forces between the upper bearing module and the seabed. That is, it is adapted to withstand the heavy loads from the sub-sea kite assembly. As may be gleaned from fig. 2a and 2b, the plurality of the frame segments here are arranged such that they enclose the tube member 331 arranged along the centre axis A'. By this arrangement, the structural integrity of the lower tether member 310 is further improved. The frame structure 316 here is made of high-tensile steel.

As illustrated in fig. 2a and 2b, each frame segment 317 typically has a delta-shaped cross sectional profile which together forms a frame structure 316 with a circular cross section. As an example, the frame structure may include 10-15 frame segments of same or different size. The frame structure in fig. 2b includes 12 frame segments. The frame structure may have a diameter between 150-300 mm and a length of 4-7m. Preferably, the frame structure may have a length of 6m. Accordingly, the lower tether member 310 may also have a length of 4-7m. Preferably, the lower tether member 310 may have a length of 6m.

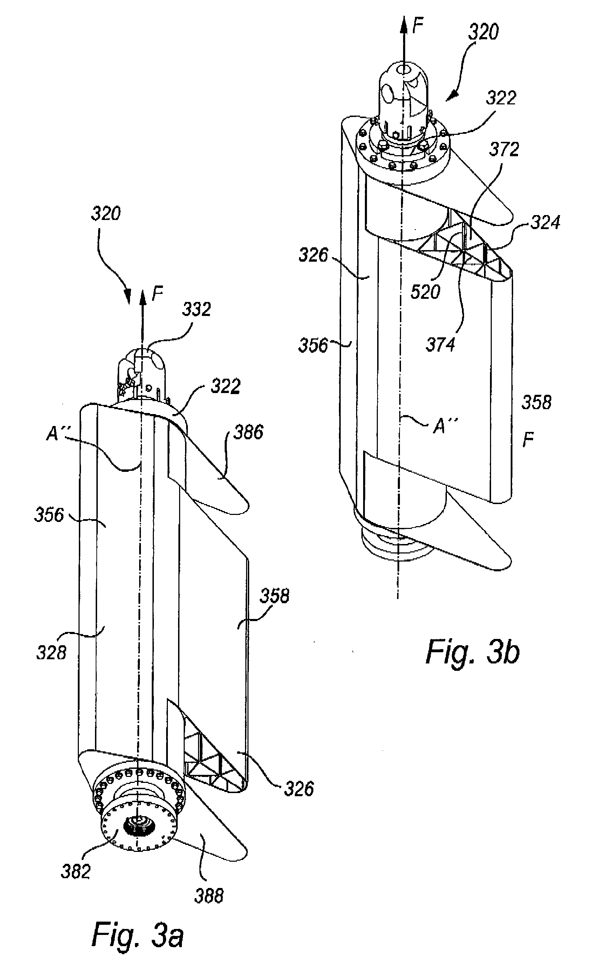

Moreover, as illustrated in fig. 1, the submerged system 300 comprises an upper bearing module 320 operatively connected to the lower tether member 310. Fig. 3a and 3b schematically illustrate an example embodiment of an upper bearing module according to the present invention. The upper bearing module 320 comprises a housing 326 enclosing a bearing unit 322. The bearing unit 322 is configured for supporting a rotational movement of the sub-sea kite assembly 410 and capable of transmitting an axial force generated by the sub-sea kite assembly 410. The axial force is generated due to the rotational movement of the sub-sea kite assembly 410 as a consequence of the tidal water currents. As mentioned above, the upper bearing module 320 is further provided with a connecting point 332 for the sub-sea kite assembly 410.

In order to facilitate installation and service of the submerged system 300 and in particular of the bearing unit 322, the upper bearing module 320 is adapted to be arranged above the lower tether member 310 as seen in the axial direction A of the submerged system 300.

Fig. 3a and 3b schematically illustrate an example embodiment of an upper bearing module according to the present invention. In this example embodiment, the housing 326 of the upper bearing module 320 here includes a second buoyant body 324 to enable additional buoyancy. Analogously to the function and components of the first buoyant body, the second buoyant body 324 here comprises a plurality of second chambers 372 arranged within the housing 326 to contain a gaseous medium. In this manner, the air imparts positive buoyancy to the upper bearing module 320 and further enhances the buoyancy of the submerged system 300. In this example, the plurality of second chambers 372 have a longitudinal extensions in an axial direction A" of the upper bearing module 320. Typically, the plurality of the second chambers 372 is spaced apart by second wall segments 374. The shape and construction of the second chambers 372 may vary in a similar manner as the shape and construction of the chambers of the first buoyant body, as explained above. In addition, the plurality of the second chambers 372 here is sealed by a second upper end portion 386 and a second lower end portion 388. However, it is to be noted that the submerged system can be installed without the second buoyant body as long as the buoyant body of the lower tether member is capable providing a sufficient level of buoyancy to the system 300 so as to keep the lower tether member in a substantially upright orientation when there is a slack of tidal water current.

As illustrated in fig. 1, upper bearing module 320 is provided with a connecting point 332, connecting the subs-sea kite assembly 410 to the system 300. Hence, the subs-sea kite assembly is rotatably connected to the connecting point 332. The submerged system 300 may be operatively connected to the subs-sea kite assembly by means of a swivel joint (not shown). The connecting point here is configured such that the subs-sea kite assembly can move smoothly in all directions depending of the current velocity direction and the subs-sea kite assembly motions. In addition, the connecting point is arranged underneath the sub-sea kite assembly allowing easy access and maintenance.

Optionally, and as shown in fig. 2a and 2b, the lower tether member 310 here is provided with an outer hydro-dynamically shaped surface 318. In this manner, the lower tether member is provided with hydro-dynamically profile. An advantage with this aspect of the present invention is that the lower tether member is allowed to better meet the forces from the tidal current without being twisted or positioned in an unfavourable sideway-orientation as seen in the direction of the tidal water current. In addition, a hydro-dynamically shaped surface has a positive impact on the friction between the outer surface of the lower tether and the surrounding tidal water currents. As an example, the hydro-dynamically shaped surface or profile can be constructed by a tapering leading edge 352 and a trailing edge 354 in the form of a rudder. Accordingly, the outer hydro-dynamically shaped surface may have a tapering leading region 352 with a convex surface and a trailing region 354 with a convex surface. In other words, the leading region is tapering towards the direction of the tidal current, i.e. it is adapted to face towards a tidal current.

Analogously, the upper bearing module 320, as shown in fig. 3a and 3b, may optionally also be provided with an outer hydro-dynamically shaped surface 328. In this manner, the upper bearing module 320 is provided with hydro-dynamically profile. An advantage with this aspect of the present invention is that the upper bearing module 320 is allowed to better meet the forces from the tidal current without being twisted or positioned in an unfavourable sideway-orientation as seen in the direction of the tidal water current. In addition, a hydro-dynamically surface has a positive impact on the friction between the outer surface of the upper bearing module 320 and the surrounding tidal water cunts. As an example, the hydro-dynamically shaped surface or profile can be constructed by a tapering leading edge 356 and a trailing edge 358 in the form of a rudder. Accordingly, the outer hydro-dynamically shaped surface may have a tapering leading region 356 with a convex surface and a trailing region 358 with a convex surface. In other words, the leading region is tapering towards the direction of the tidal current, i.e. it is adapted to face towards a tidal current.

Advantageously, the upper bearing module 320 may be operatively connected to the lower tether member 310 by an inter-locking means 382, 382'. By the inter-locking means and the shape of the lower tether member 310, it becomes possible to provide a system which facilitates easy assembly and mounting operation. Likewise, additional inter-locking means 382" can be arranged between the lower tether member and the anchoring point 315.

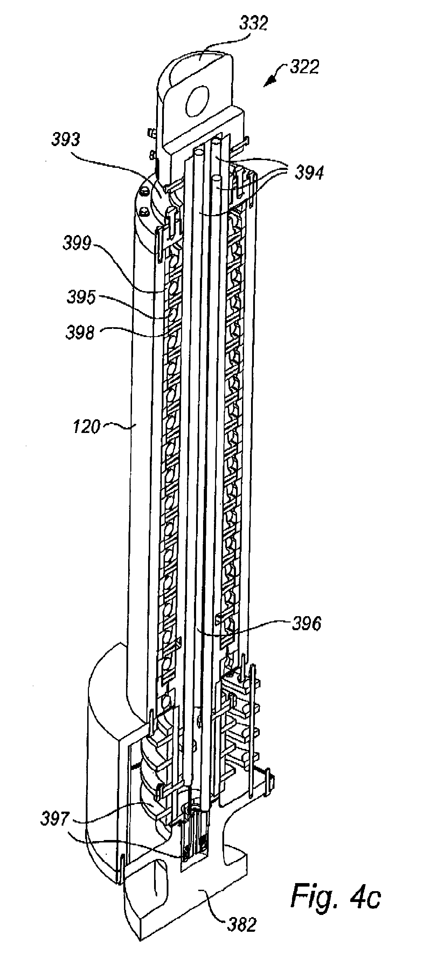

Optionally, the submerged system 300 may comprise an electrical cable 394 configured to transfer electrical energy and/or signals, as is shown in e.g. fig. 4c.

Optionally, the submerged system 300 may comprise a second tether member 310' (not shown). The construction of the second tether member 310' is similar to the lower tether member besides that the anchoring point may be replaced by a inter-locking means as described above with respect to the lower tether member. Hence, the second tether member may also be provided with an inter-locking means such that the second tether member can be operatively connected to the lower tether member or the upper bearing module.

The second tether member 310' may include any feature(s) of the features mentioned above with respect to the lower tether member. In this aspect of the present invention, the second tether member is stackable to the lower tether member. As an example, the second tether member is connected to the lower tether member by an inter-locking means so as to deliver submerged system with an extended tether member assembly. In this manner, it becomes possible to deliver a submerged system fulfilling any length dimension as required by a specific case by stacking two or more members on top of each other.

The submerged unit may also comprise an electrical cable (not shown) configured to transfer electrical energy and/or electrical signals within the system 300 and to the sub-sea kite assembly 340. To further increase the robustness and reliability of the unit, the cable can be integrated into the submerged system300.

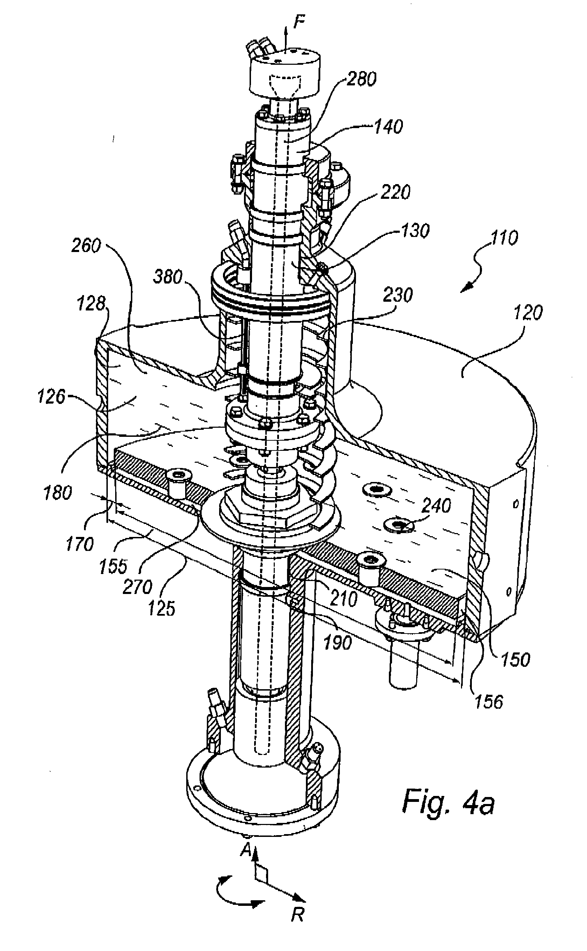

Turning now to the construction of the bearing unit 322 of the bearing module 320, several example embodiments are possible within the scope of the present invention, as shown by figures 4a-4c.

Fig. 4a schematically illustrates a cross-sectional view of a first example embodiment of a bearing unit according to the present invention. In this embodiment, the bearing unit is a hydraulic unit 110. As is schematically indicated in fig. 4a, the hydraulic unit 110 comprises a housing 120. The housing 120 has an inner diameter 125 and an inner cylindrical surface 126. The housing is hollow, forming a so-called chamber. Hence, by means of the inner diameter and the inner cylindrical surface, an inner housing volume 128 is formed.

The inner housing volume 128 here contains a lubricant fluid 180 in form of oil. That is, the inner housing volume 128 is filled with the lubricant fluid 180. Oil has a suitable viscosity of 0.27 Pa*s, and a suitable density of 870kg/m³.

In addition, the hydraulic unit 110 comprises a piston member 130. As illustrated in fig. 4a, the piston member 130 is co-axially arranged within the housing 120. The inner housing volume 180 surrounds a major part of the piston member 130. The piston member 130 is also configured to be rotatable around an axis A", and movable in the axial direction A" upon an external axial force F on the piston member 130. The piston member 130 comprises a piston rod 140 and a piston flange 150. The piston flange 150 is provided with an outer diameter 155 and an outer cylindrical surface 156. In the illustrated example, the piston rod 140 and the piston flange 150 are separate components which are attached to each other prior to use. For instance, the lower end of the piston rod 140 is press-fitted to the piston flange 150. In another embodiment, the piston rod 140 and the piston flange 150 are made from the same piece of material.

If electric wires (not shown) are included in the hydraulic unit 130, a hollow piston rod 140 can be selected, as is schematically indicated in fig. 3a and 3b. To this end, the hollow piston rod 140 forms an internal channel 280 within the piston rod 140, enabling the electric wires to be stored in the internal channel 280. Similarly, the housing 120 may be provided with electric connectors configured to transfer electricity to various components of the hydraulic unit.

In all of the embodiments of the present invention, the outer diameter 155 of the piston flange 150 is smaller than the inner diameter 125 of the housing 120 such that a radial gap 170 is formed between the inner cylindrical surface 126 of the housing 120 and the outer cylindrical surface 156 of the piston flange 150. In this manner, the lubricant fluid 180 is capable of flowing through the radial gap 170 upon an exertion of a tensile force F on the piston member 130 in the axial direction A". As is illustrated in fig. 4a, the radial gap 170 is formed in the radial direction R, i.e. the transverse direction R of the hydraulic unit 110, which is perpendicular to the axial direction A". However, as is clearly evident from the fig. 4a, the radial gap has an extension in the axial direction A" corresponding to the thickness of the piston flange 150. The piston flange 150 should be sufficiently dimensioned to withstand big axial forces and several years in heavy condition without maintenance. In the illustrated example, the outer diameter 155 of the piston flange is 650 mm and the thickness of the piston flange is 30 mm. The distance of the radial gap may be between 0.05 - 0.5 nun in the radial direction R. In one embodiment, the distance of the radial gap 170 is 0.1 mm. The extension of the radial gap in the axial direction A" is equal to the thickness of the piston flange, i.e. 30 mm. However, the shape and the size of the piston flange 150 are ultimately determined by the desired damping characteristics, and it is therefore apparent to the skilled in the art to make any final adjustments of the piston flange dependent on each specific case.

In various embodiments, the inner cylindrical housing surface 126 and/or the outer cylindrical surface 156 of the piston flange 150 are made of friction reducing material, for example plastics material having a low friction co-efficient. The complete components and/or surfaces may also be made from stainless steel or any other suitable material which are capable of being used in this specific environment.

As mentioned above, the piston member 130 is driven by a force originating from tidal water forces. The tidal water generates a constant linear force which is acting on the hydraulic unit and its piston member in the axial direction A". Due to this axial force, the hydraulic unit 110 and the submerged system 300 are subjected to heavy vibrations and shocks. By the provision that the piston member 130 is rotatable arranged around the axis A", and configured to take up axial forces in the axial direction A", the piston rod 140 is capable of moving the piston flange 150 from a lower position to an upper position as seen in the axial direction A. The lower position of the piston flange 150 is schematically illustrated in fig. 4a.

In addition, since a sub-sea kite assembly 340 is anchored to the hydraulic unit 110 via the struts 410, and is swivelling in a pattern around the submerged system 300 and the hydraulic unit 110 during the tidal water interval, the piston member 130 and the hydraulic unit 110 may also be subjected to a torque. Hence, the piston member 130 is configured to be rotatable arranged around the axis A".

By the provision that the outer diameter 155 of the piston flange is smaller than the inner housing diameter 125 such that a radial gap 170 is formed between the inner housing cylindrical surface 126 and the outer cylindrical surface of the piston flange 156, it becomes possible to decrease friction between the piston member surface and the inner cylindrical surface of the housing. In this example, the piston member surface refers to the outer cylindrical surface of the piston flange 156, and the inner cylindrical surface of the housing refers to the inner housing cylindrical surface 126. This is accomplished due to the radial gap 170 which results in that there is no contact between the piston member surface and the inner cylindrical surface of the hosing. Accordingly, the lubricant fluid 180 is capable of flowing from one side of the piston flange 150 to another side of the piston flange 150 via the radial gap 170. In other words, the radial gap 170 forms a flow channel. To this end, the piston flange 170 is made with a deliberate clearance between the inner housing cylindrical surface 126 and the outer cylindrical surface 156 of the piston flange, which forms an annular gap in the radial direction R, i.e. the radial gap 170. As such, when the surface of the piston flange is pressed towards an inner surface of the hydraulic unit housing 120, the lubricant fluid flow is constricted by the radial gap 170. The high pressure drop across the radial gap 170 produces a pressure differential across the piston flange 150, which creates a damping force. In this regard, the inner housing cylindrical surface 126 and the outer cylindrical surface 156 of the piston flange 150 form a pair of bearing surfaces radial opposite to each other with radial gap 170 (sometimes referred to as a "bearing gap") containing a lubricant fluid there between.

Advantageously, the hydraulic unit housing 120 should be sealed such that a closed system is obtained which ensures that no oil leaks out from the inner housing volume 128. Hence, as is schematically indicated in 4a, the hydraulic unit 110 here comprises a sealing arrangement 190. As is illustrated in fig. 4a, the sealing arrangement 190 is located at the end of the piston rod 140 to seal the annular gaps between the piston rod 140 and the housing 120 such that the inner housing volume 128 forms a closed system.

As is schematically indicated in fig. 4a, the inner housing volume 128 can be separated into a first inner housing volume 260 and a second inner housing volume 270. Thereby, the lubricant fluid 180 flows from the first inner volume 260 to the second inner volume 270 via the radial gap 170 when pressurized by the tensile force F. Typically, the first inner volume 260 is emptied, i.e. the lubricant fluid 180 has flowed to the second inner volume 270, within 6 h. In this context, 6 h corresponds to a normal tidal water session. When the hydraulic unit 110 is pressurized by a tensile force F, originating from the kite assembly 340, the lubrication fluid 180 flows from the first inner housing volume 260 to the second inner housing volume 270.

In order to ensure that the lubricant fluid 180 can return from the second inner volume 270 to the first inner volume 260 upon a release of the loads acting on the piston member 130, the piston flange 150 may further comprise a plurality of check valves 240. As is illustrated in fig. 3a, the check valves extend through the piston flange 150 in an axial direction A. In this manner, the lubrication fluid can flow through the check valves in one direction upon a release of the check valves. The check valves are closed in a first state, i.e. a state when there is an axial force F acting on the piston member 130 such that the piston member 130 moves from a first position to a second position. In this manner, it becomes possible to allow the lubricant fluid 180 to flow from the second inner volume 270 through the piston flange 150, via the check valves 240, to the first inner volume 260 when the tidal water is over. When the tidal water is over, the force acting on the piston member 130 is sufficiently low so as to allow the piston member 130 to return to its original position, i.e. the first position. Check valves 240 are commonly known in the art and suitable check valves can be selected by the skilled person depending on the specific situation. Accordingly, the nature, design and incorporation of check valves into the hydraulic unit 130 of the present invention will be apparent to the skilled person in the art.

The hydraulic unit 110 of the embodiment as shown in fig. 4a may further comprise a return spring 230. The return spring 230 is co-axially arranged along the piston rod 140. Hence, the return spring 230 extends in the axial direction A" along the piston rod 140. In the illustrated example in figs. 4a, the return spring 140 is arranged between a surface of the housing 120 and a surface of the piston flange 150. The return spring 230 facilitates the adjustment of the piston member 130 when the tidal water is over. In this respect, the return spring 140 is tensioned such that the piston member 130 returns to its starting position, as is illustrated in fig. 4a, when the tidal water is over i.e. when no force is acting on the piston member 130 in the axial direction A". In other words, by the adjustment, the piston member 130 returns from the second position to the first position, i.e. the starting position. The return spring 230 is preferably tensioned such that the adjustment period of the piston member is less than 20 minutes.

Located within the hydraulic unit 110 is, optionally, a pair of support bearings 210 and 220, as is schematically indicated in fig. 4a. Support bearings are typically designed to ensure that no radial movement of the piston member 130 can take place. The support bearings 210 and 220 further ensure that there is no physical contact between the housing 120 and the piston member 130. Support bearings are commonly known in the art and the nature, design and incorporation of support bearings into the hydraulic unit of the present invention will be apparent to the skilled person in the art.

At the bottom of the hydraulic unit 110, there may be located a slip ring (not shown) for transferring electrical energy.

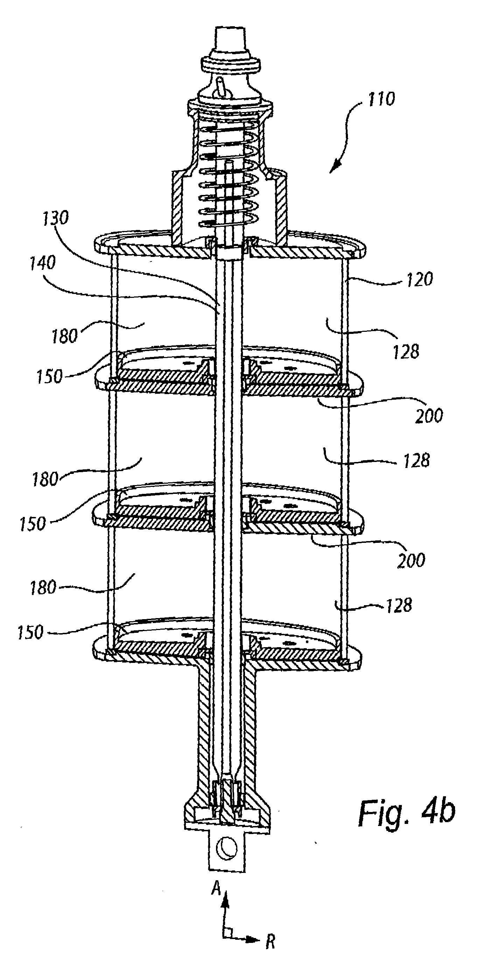

Fig. 4b schematically illustrates a cross-sectional view of a second example embodiment of a bearing unit according to the present invention. In this exemplifying embodiment, the hydraulic unit housing 120 of the hydraulic unit 110 comprises three housing volumes 128 formed by inner diameters and inner cylindrical surfaces of the housing 120. Further, in this specific embodiment, the hydraulic unit housing 120 is made of three cylinders stacked on top of each other with two intermediate walls 200. The housing 120 may of course also be configured differently. For instance, the housing 120 may be made of only one cylinder. The skilled person would realize other possibilities to design and assemble the housing 120 within the scope of the claims. The inner housing volumes 128 contain a lubricant fluid 180. Further, the piston member 130 is co-axially arranged within the housing volumes 128 and configured to be rotatable around an axis A" and movable in an axial direction A". The piston member 130 comprises a piston rod 140 and three piston flanges 150 in each housing volume 128. Each piston flange 150 presents an outer diameter and an outer cylindrical surface (not indicated in this figure). The outer diameter of each piston flange 150 is smaller than the inner diameters of the housing 120, such that a radial gap is formed between each inner cylindrical housing surface and the outer cylindrical surface of each piston flange 150. The lubricant fluid is capable of flowing through each radial gap upon an exertion of a tensile force F on the piston member 130. It shall be noted that the housing 120 may have different inner diameters in each housing volume 128 with corresponding outer diameters of each piston flange 150, but in this illustration the inner diameters of the housing 120 are essentially equal. This configuration will allow the hydraulic unit to withstand larger axial forces without the need to increase the piston flange diameter. Thus, by stacking two or more housing volumes 128 on top of each other and incorporate piston flanges 150 in each volume 128, a larger total flange surface area will be realized and thereby the hydraulic unit 110 can withstand larger axial forces without a need to increase the diameter of the piston flange 150. Thereby the width of the unit can be kept at a minimum. This can for instance be advantageous when the hydraulic unit 110 is used in a submerged system for anchoring a large sub-sea kite assembly. The sub-sea kite assembly may for instance have a total wingspan of about 12 meters, which would result in large axial forces exerted on the hydraulic unit 110. It shall be noted that all other embodiments of the invention are applicable to this embodiment.

Accordingly, the bearing unit 322 may comprises a plurality of axial bearings operatively connected to each other by an elastic connection.

Fig. 4c schematically illustrates a cross-sectional view of a third example embodiment of a bearing unit according to the present invention. In this embodiment, the bearing unit is a conventional rolling element bearing. Accordingly, the bearing unit comprises a set of rolling elements 395, a distance ring 399 and a spring 398. The rolling element bearing may further be provided with one or several slip rings 379 to transfer electrical signals. As is evident from fig. 4b, the rolling element bearing here includes a plurality of cables 394 operatively connected to the sub-sea kite assembly and a hollow shaft 396. Moreover, the rolling element bearing here is provided with the connecting point 332 and the inter-locking means 382 so as to become operatively connected to the sub-sea kite assembly and the lower tether member, respectively. It is to be noted that all other features and embodiments of the present invention are applicable to this embodiment of the bearing unit as long as the configuration is allowed to withstand larger axial forces.

Since the function and configuration of a rolling element bearing is apparent to the skilled person, no further explanation of its components is needed.

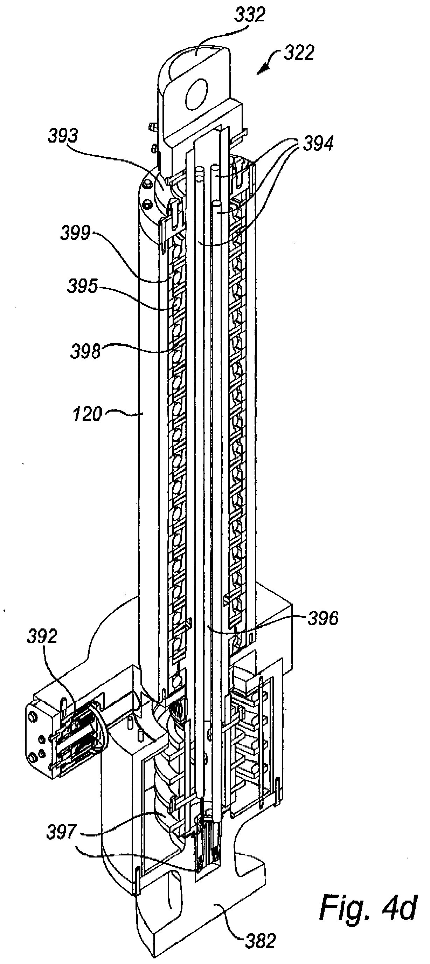

Fig. 4d schematically illustrates a cross-sectional view of the bearing unit according to the example embodiment as shown in fig. 4c, besides that the bearing unit here is provided with a motor 392. The motor 392 here is configured for facilitating a swivelling motion of a marine device. As an example, the motor is position within the bearing unit 322 and operatively connected to it such that a smooth transfer of further supporting energy to the marine device is obtained. Hence, the motor is operatively connected to the outgoing axis of the bearing unit which is operatively connected to the sub-seat kite assembly via the connecting point 332.

In all of the embodiments of the present invention, the submerged system 300 may comprise a sensor (not shown). In addition, or alternatively, the sensor may be arranged on the bearing unit 322. In addition, or alternatively, the sensor may be arranged within the bearing unit 322, as is shown e.g. in fig. 4a. The sensor 380 is here capable of sensing a relative rotation between the hydraulic unit 110 and the housing 326 around the axial direction A. In other embodiments, the sensor 380 may be integrated into a bearing of the hydraulic unit 110 and/or the submerged system 300. For instance, the sensor can be provided in the form of an angular sensor bearing. In addition, or alternatively, the sensor may be located within the housing 326. For instance, the sensor can be provided in the form of a linear piston sensor. The sensor can also be provided in the form of an oil pressure sensor. For instance, the sensor can be provided in the form of an axial load sensor. Other combinations of sensors are also contemplated as long as the sensor can be applied to the bearing unit 322 so as to achieve reliable sensing by a sensor.

Thanks to the provision that the lower tether member comprises a first buoyant body to enable positive buoyancy such that the lower tether member is capable of floating in an upright orientation, and a frame structure configured to provide structural integrity to the submerged system, the complete submerged system is capable of maintaining an upright orientation even during a slack water situation. In this manner, maintenance operation of the system is further facilitated. Moreover, since the frame structure provides structural integrity to the system, the lower tether member has improved stiffness and robustness compared to previous submerged systems. In all embodiments of the present invention, the upper bearing module 320 is adapted to be arranged above the lower tether member 310 as seen in the axial direction A of the submerged system 300. In this manner, installation and service of the submerged system 300 and in particular of the bearing unit 322 is facilitated. This is due to the fact that the bearing unit is positioned as close as possible to the sea surface without impairing the swivel function. Accordingly, the present invention provides a system having improved installation and maintenance facilities compared to a mooring system or submerged system with a bearing unit located on or near the seabed. To this end, the present invention provides a less expensive system in terms of installation and service costs compared to existing sub-sea kite assemblies and corresponding submerged system. In addition, there is no need for a complicated bearing solution on the sea bottom.

The submerged system according to the present invention is not restricted to the particular use of the above embodiments. Hence, it is envisaged that the submerged system can be used in any other environment requiring the functions and advantages as provided by any of the aspects above.

Additionally, even though the invention has been described with reference to specific exemplifying embodiments thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

### Reference numerals

- 300: submerged system
- 310: lower tether member
- 310': second tether member
- 314: first buoyant body
- 315: anchoring point
- 316: frame structure
- 317: frame segments
- 318: outer hydro-dynamically surface
- 320: upper bearing module
- 322: bearing unit
- 324: second buoyant body
- 326: housing
- 328: outer hydro-dynamically surface
- 331: tube member
- 332: connecting point
- 340: sub-sea kite assembly
- 342: turbine
- 344: generator
- 346: rudder
- 348: nacelle
- 350: wing
- 352: front region
- 354: rear region
- 356: front region
- 358: rear region
- 362: plurality of chambers
- 364: wall segment
- 366: upper end portion
- 368: lower end portion
- 372: plurality of second chambers
- 374: second wall segments
- 380: sensor
- 382: inter-locking means
- 386: second upper end portion
- 388: second lower end portion
- 392: motor
- 393: seal
- 394: cable
- 395: rolling elements
- 396: hollow shaft
- 397: slip ring
- 398: spring
- 399: distance ring
- 410: strut, cable or wire
- 710: sea water
- 720: seabed
- A: axial direction and centre axis of submerged system
- A': axial direction and centre axis of lower and/or second tether member
- A": axial direction and centre axis of upper bearing module and/or bearing unit

## Claims

1. A submerged system (300) for anchoring a marine device such as a sub-sea kite assembly within a fluid, the submerged system (300), comprising:
a lower tether member (310) having an anchoring point (315) configured for anchoring the submerged system (300) to a seabed, the lower tether member (310) having an longitudinal extension in an axial direction (A) of the submerged system (300) and comprising a first buoyant body (314) to enable a positive buoyancy such that the lower tether member (310) is capable of floating in a substantially upright orientation, the lower tether member (310) further comprising a frame structure (316) adapted to provide structural integrity to the submerged system (300) and capable of transmitting an axial force (F) to the seabed;
an upper bearing module (320) operatively connected to the lower tether member (310), the upper bearing module (320) comprising a housing (326) enclosing a bearing unit (322), the bearing unit (322) is configured for supporting a rotational movement of a marine device and capable of transmitting the axial force (F), the upper bearing module (320) being provided with a connecting point (332) for a marine device;
wherein the upper bearing module (320) is adapted to be arranged above the lower tether member (310) as seen in the axial direction (A) of the submerged system (300).

2. The submerged system (300) according to claim 1, wherein the first buoyant body (314) comprises a plurality of chambers (362) to contain a gaseous medium such that the lower tether member (310) is provided with positive buoyancy.

3. The submerged system (300) according to claim 2, wherein the chambers (362) have a longitudinal extensions in an axial direction (A') of the lower tether member (310).

4. The submerged system (300) according to claim 2 or 3, wherein the plurality of the chambers (362) are spaced apart by wall segments (364).

5. The submerged system (300) according to claim 2 to claim 4, wherein the plurality of the chambers (362) are sealed by an upper end portion (366) and a lower end portion (368).

6. The submerged system (300) according to any one of the previous claims, wherein the first buoyant body (314) is rotatably connected to the frame structure (316).

7. The submerged system (300) according to any one of the previous claims, wherein the frame structure (316) comprises a plurality of frame segments arranged in a circular formation about a centre axis (A') of the frame structure (316).

8. The submerged system (300) according to claim 7, wherein the frame structure (316) further comprises a tube member (331) extending along the centre axis (A') of the frame structure (316) and adapted to transmit the axial force (F) between the upper bearing module (320) and the seabed.

9. The submerged system (300) according to any one of the previous claims, wherein the frame structure (316) is made of high-tensile steel.

10. The submerged system (300) according to any one of the previous claims, wherein the housing (326) of the upper bearing module (320) includes a second buoyant body (324) to enable additional buoyancy.

11. The submerged system (300) according to claim 10, wherein the second buoyant body (324) comprises a plurality of second chambers (372) arranged within the housing (326) to contain a gaseous medium.

12. The submerged system (300) according to any one of the previous claims, wherein the lower tether member (310) is provided with an outer hydro-dynamically shaped surface (318).

13. The submerged system (300) according to any one of the previous claims, wherein the upper bearing module (320) is provided with an outer hydro-dynamically shaped surface (328).

14. The submerged system (300) according to any one of the previous claims, wherein the connecting point (332) comprises a swivel joint.

15. The submerged system (300) according to any one of the previous claims, wherein the upper bearing module (320) is operatively connected to the lower tether member (310) by an inter-locking means (382).

16. The submerged system (300) according to any one of the previous claims, wherein the bearing unit (322) comprises a plurality of axial bearings operatively connected to each other via elastic connections.

17. The submerged system (300) according to any one of the previous claims, wherein the bearing unit (322) is a hydraulic bearing unit (110).

18. The submerged system (300) according to any of the previous claims, further comprising a second tether member having an inter-locking connection such that the second tether member can be operatively connected to the lower tether member (310) or the upper bearing module (320).
